## Europäisches Patentamt

## European Patent Office

## Office européen des brevets

(11) Veröffentlichungsnummer: **0 097 871**
**B1**

(12) **EUROPÄISCHE PATENTSCHRIFT**

(45) Veröffentlichungstag der Patentschrift:
**18.03.87**

(21) Anmeldenummer: **83105845.8**

(22) Anmeldetag: **15.06.83**

(51) Int. Cl.⁴: **A 47 C 27/14,** A 47 C 7/18

(54) **Polstermaterial, insbesondere für Fahrzeugsitze, aus diesem Material hergestellter Polsterkörper und Verfahren zur Herstellung eines solchen Polsterkörpers.**

(30) Priorität: **25.06.82 DE 3223776**

(43) Veröffentlichungstag der Anmeldung:
**11.01.84 Patentblatt 84/2**

(45) Bekanntmachung des Hinweises auf die Patenterteilung:
**18.03.87 Patentblatt 87/12**

(84) Benannte Vertragsstaaten:
**FR GB IT**

(56) Entgegenhaltungen:
**DE-A-1 805 447**
**DE-A-2 165 917**
**FR-A-2 099 519**
**GB-A-793 632**
**GB-A-858 246**
**GB-A-1 300 417**
**US-A-3 647 260**

(73) Patentinhaber: **KEIPER RECARO GmbH & Co.,**
**Büchelstrasse 54- 58, D-5630 Remscheid 14 (DE)**

(72) Erfinder: **Putsch, Peter- Ulrich, Dipl.- Ing.,**
**Hintersteinhof 9, D-6760 Rockenhausen (DE)**

(74) Vertreter: **Patentanwälte Phys. Bartels Dipl.- Ing.**
**Fink Dr.- Ing. Held, Lange Strasse 51, D-7000**
**Stuttgart 1 (DE)**

## Beschreibung

Die Erfindung betrifft ein Polstermaterial, das die Merkmale des Oberbegriffs des Anspruches 1 aufweist, sowie einen aus einem solchen Polstermaterial hergestellten Polsterkörper und ein Verfahren zur Herstellung eines derartigen Polsterkörpers.

Üblicherweise wird eine Polsterung für einen Fahrzeugsitz oder auch andere in einem Fahrzeug gepolsterte Teile in der Weise hergestellt, daß auf einen Polsterträger ein Polstermaterial, beispielsweise ein Schaumstoff, welcher vorzugsweise die gewünschte Form hat, welche das Polster annehmen soll, aufgebracht wird. Danach wird das Polstermaterial mit einem Bezugsstoff abgedeckt, der mit dem Polsterträger verbunden wird, um der gesamten Polsterung den erforderlichen Halt zu geben. Der Arbeitsaufwand ist bei der Herstellung einer solchen Polsterung verhältnismäßig groß. Außerdem hängt das Aussehen der Polsterung zumindest teilweise auch von der Verarbeitungsqualität ab.

Der Aufwand für das Aufbringen einer Polsterung auf den Polsterträger läßt sich vermindern, wenn man ein mehrschichtiges Material verwendet, wie es durch das DE-GM 79 23 177 bekannt ist. Dieses mehrschichtige Material weist eine Unterschicht, die beispielsweise aus einem Nesselgewebe besteht, eine Zwischenschicht aus Kunststoffschaum und eine Oberschicht auf, die beispielsweise aus Velour bestehen kann. Statt des Nesselgewebes kann aber auch beispelsweise eine Hartfaserplatte vorgesehen sein. Die einzelnen Schichten dieses bahn- oder plattenförmigen Materials sind durch Flammkaschierung, Warmversiegelung oder dergleichen miteinander verbunden. Man braucht daher nur aus einer solchen Bahn den erforderlichen Zuschnitt herauszuschneiden und auf dem Polsterträger zu befestigen. Nachteilig ist hierbei vor allem, daß, wie bei den üblichen Polsterungen, die Formgebung, insbesondere Krümmungen, weitgehend mittels des Polsterträgers erfolgen muß.

Einen Polsterträger, der eine vollflächige Anlage des Polsterkörpers erlaubt, benötigt auch ein bekannter Polsterkörper (US-A-3 647 260), der als Auflage für einen Schalensitz vorgesehen ist. Zwar wird bei diesem bekannten Polsterkörper eine aus einem thermoplastischen verformbaren Kunststoff bestehende Trägerschicht in eine der Kontur des schalenförmigen Polsterträgers entsprechende Form gebracht und dann auf diese Trägerschicht eine Zwischenschicht aus einem Kunststoffschaum und auf diese Zwischenschicht eine Oberschicht aus einem Bezugsmaterial aufgeklebt, so daß der vorgeformte Polsterkörper nur noch auf den Polsterträger aufgelegt zu werden braucht. Um die erforderliche vollflächige Anlage der Trägerschicht am Polsterträger zu erreichen, ist das Material, aus dem die Trägerschicht besteht nicht nur hart, sondern auch elastisch. Die Verbindung der Polsterträger erfolgt in der Weise, daß ein über die Trägerschicht und die Zwischenschicht überstehender Randstreifen der Oberschicht am Rand des Polsterträgers festgeklammert wird.

Der Erfindung liegt die Aufgabe zugrunde, ein Polstermaterial zu schaffen, das es erlaubt, mit möglichst geringem Aufwand eine Polsterung vor allem auch dort vorsehen zu können, wo mit Hilfe der Polsterung eine Formgestaltung erwünscht ist. Insbesondere soll eine solche Polsterung für diejenigen Bereiche von Fahrzeugsitzen geschaffen werden, in denen der Körper des Sitzbenutzers nur gelegentlich abgestützt wird und der Sitz in seiner äußeren Form durch das Polster gestaltet werden soll.

Diese Aufgabe löst ein Polstermaterial mit den Merkmalen des Anspruches 1, weil aus einem solchen als Meterware herstellbaren Polstermaterial nur der erforderliche Zuschnitt ausgeschnitten und dann in diejenige Form gebracht zu werden braucht, welche die fertige Polsterung aufweisen soll, da die als Trägerschicht dienende Kunststoffolie wegen ihrer selbsttragenden Ausbildung die ihr bei der Vorformung gegebene Form auch unter Belastung beim Gebrauch beibehält. Der vorgeformte Polsterkörper braucht dann nur noch auf dem Polsterträger festgelegt zu werden.

Der Erfindung liegt auch die Aufgabe zugrunde, einen möglichst kostengünstigen Polsterkörper zu schäffen, der aus dem erfindungsgemäßen Polstermaterial besteht. Diese Aufgabe löst ein Polsterkörper mit den Merkmalen des Anspruches 2, da ein solcher Polsterkörper einerseits nur aus dem Ausgangsmaterial besteht, also nicht mit zusätzlichen Teilen oder mit Nähten versehen werden muß, und unmittelbar auf dem Polsterträger festgelegt werden kann.

Der Erfindung liegt auch die Aufgabe zugrunde, ein möglichst einfaches Verfahren zur Herstellung eines derartigen Polsterkörpers anzugeben. Diese Aufgabe wird mit den Merkmalen des Anspruches 3 gelöst.

Im folgenden ist die Erfindung anhand von in der Zeichnung dargestellten Ausführungsbeispielen im einzelnen erläutert. Es zeigen:

Fig. 1. einen Schnitt durch das Polstermaterial gemäß einem ersten Ausführungsbeispiel,

Fig. 2 einen Schnitt durch einen beibend verformten Teil eines aus einem Polstermaterial gemäß Fig. 1 hergestellten Polsterkörpers,

Fig. 3 einen Schnitt durch eine Randzone des Polsterkörpers.

Fig. 4 einen unvollständig dargestellten Querschnitt durch einen Fahrzeugsitz mit einem zweiten Ausführungsbeispiel,

Fig. 5 einen Querschnitt entsprechend Fig. 4 mit einem dritten Ausführungsbeispiel.

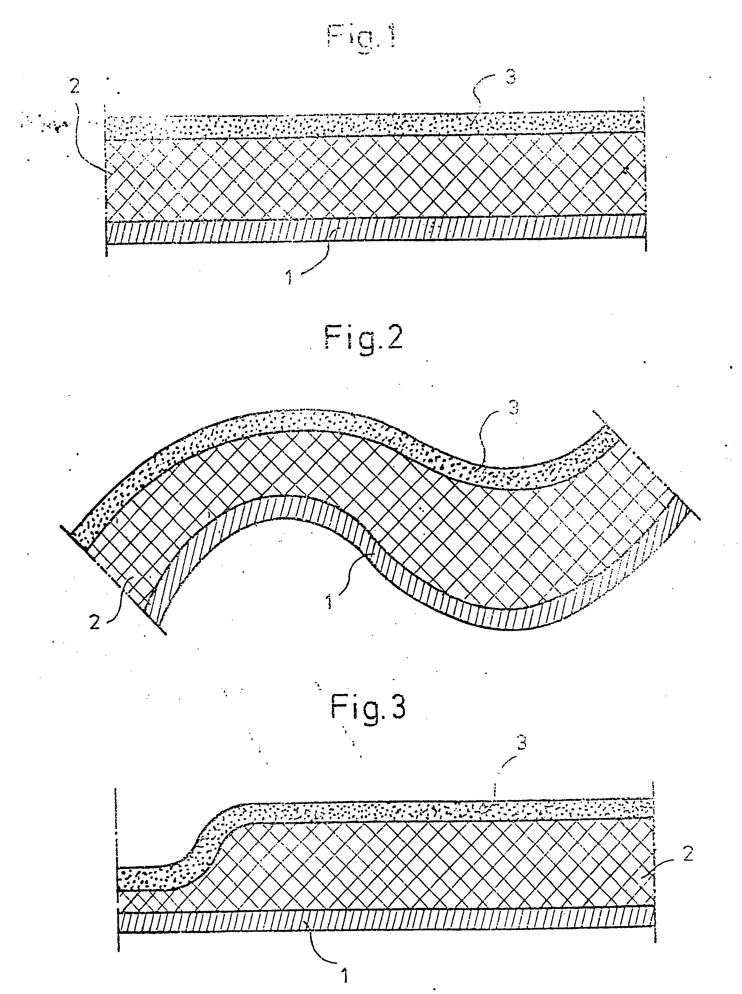

Das in Fig. 1 dargestellte Polstermaterial ist für eine inaktive Polsterung eines Fahrzeugsitzes, also eine Polsterung bestimmt, welche nur gelegentlich den Körper des Sitzbenutzers abzustützen braucht und die die äußere Form des Sitzes mitgestaltet. Dieses Polstermaterial wird als Meterware, d.h. in Form von Bahnen oder Platten, hergestellt und besteht aus einer thermoplastisch verformbaren Kunststoffolie 1 als Trägerschicht, deren Dicke so gewählt ist, daß sie den Polsterkörper in der gewünschten Form zu halten vermag, auch wenn dieser beispielsweise Krümmungen aufweist und im Gebrauch Belastungen ausgesetzt ist. Die Kunststoffolie 1 ist tiefziehfähig und hochfrequenz-schweißbar.

An der einem nicht dargestellten Polsterträger abgekehrten Seite der Kunststoffolie 1 liegt eine Zwischenschicht 2 an, die aus einem Kunststoffschaum besteht. Die Dicke dieser Zwischenschicht hängt von der gewünschten Dicke der Polsterung sowie von eventuell vorzusehenden Krümmungen ab. Die Zwischenschicht 2 ist mit der Kunststoffolie 1 verklebt.

Die der Kunststoffolie abgekehrte Seite der Zwischenschicht 2 ist von einer Oberschicht 3 vollständig abgedeckt, welche den Bezug des Polsterkörpers bildet und aus einem teilelastischen, spannungs- und temperaturelastischen Material, beispielsweise einem Bezugsstoff oder einer PVC-Dekorfolie, besteht. Diese Oberschicht 3 ist mit der Zwischenschicht 2 verklebt, so daß die drei Schichten ein fest verklebtes Sandwich bilden.

Der für die Herstellung eines Polsterkörpers erforderliche Zuschnitt wird mittels eines Schneidwerkzeuges oder eines Laserstrahls aus dem bahn- oder plattenförmigen Material ausgeschnitten. Um Lagerraum, Transport und mehrfache Disposition zu ersparen, kann dieses Ausschneiden unmittelbar hinter der Maschine erfolgen, welche das sandwichartig aufgebaute Polstermaterial herstellt. Anschließend wird der Zuschnitt in diejenige Form gebracht, die der aus ihm herzustellende Polsterkörper aufweisen soll. Die erforderliche Verformung wird durch Tiefziehen unter thermoplastischer Verformung der Kunststoffolie 1 bewirkt. Dabei erhält im Ausführungsbeispiel der Zuschnitt beispielsweise Krümmungen, wie sie Fig. 2 zeigt. Außerdem wird, wie Fig. 3 zeigt, die Oberschicht 3 längs ihres Randes mit der Kunststoffolie 1 und dem dazwischenliegenden Kunststoffschaum der Zwischenschicht 2 verschweißt, wobei die Zwischenschicht 2 im Bereich der Schweißnaht erheblich komprimiert wird. Die Verschweißung erfolgt mit Hochfrequenz-Erwärmung. Selbstverständlich können derartige Schweißnähte auch vorgesehen werden, um die Polsterung in einzelne Felder zu unterteilen.

Die Kunststoffolie 1 hält nach der Verformung den Polsterkörper in der ihm bei der Verformung gegebenen Form, so daß der Polsterkörper, der keine weitere Bearbeitung erforderlich macht, nur noch auf einem nicht dargestellten Polsterträger festgelegt zu werden braucht.

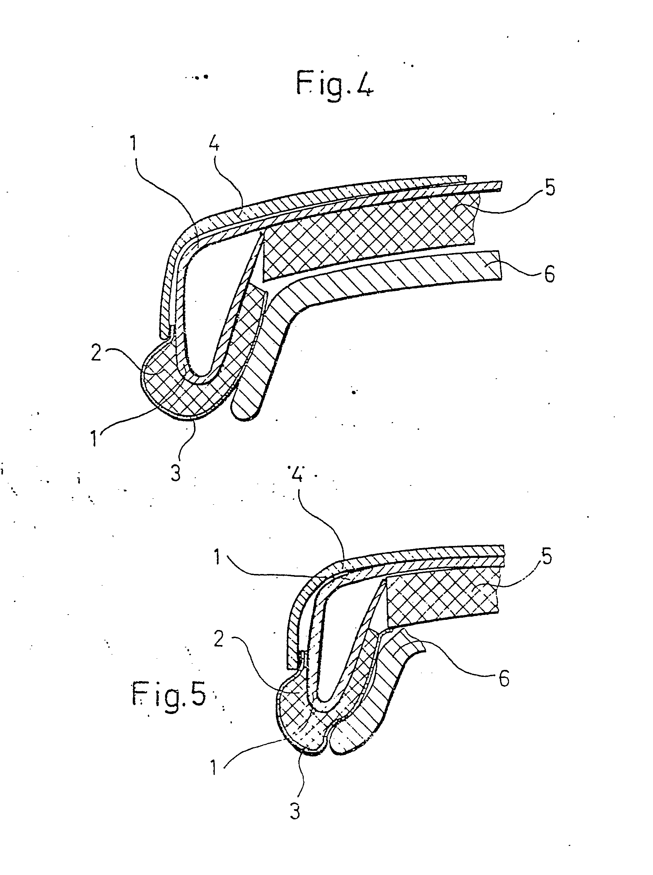

Eine der Einsatzmöglichkeiten eines aus dem erfindungsgemäßen Polstermaterial hergestellten Polsterkörpers zeigt Fig. 4, und zwar anhand der Rückenlehne eines Fahrzeugsitzes. In gleicher Weise könnte aber auch der Sitzteil eines solchen Sitzes ausgebildet sein. Die aus dem thermoplastisch verformbaren Kunststoff bestehende Trägerschicht 1 bildet eine flache Schale mit vorgezogenen seitlichen Rändern. Wie Fig. 4 zeigt, ist die Trägerschicht 1 im Anschluß an eine Krümmung nach vorne geführt und von dort unter Bildung einer nach innen weisenden, zweiten Krümmung wieder zurück bis zu demjenigen Abschnitt der Trägerschicht geführt, welche den in Querrichtung der Rückenlehne schwach gekrümmten Teil der Schale bildet. Der Rand dieser Schale ist also doppelwandig ausgebildet, wodurch seine Stabilität erhöht wird. Daher kann dieser Rand auch relativ große, in Querrichtung des Sitzes wirkende Kräfte ohne Deformation oder wesentliche Deformation aufnehmen.

Die mit der Trägerschicht 1 beispielsweise durch Kleben verbundene Zwischenschicht 2 deckt, wie Fig. 4 zeigt, den durch die Trägerschicht 1 gebildeten seitlichen Rand nur nach vorne und teilweise nach außen und innen hin ab. Auf der Außenseite endet die Zwischenschicht dort, wo der nach vorne gezogene Rand einer Kunststoffabdeckung 4 endet, welche an der nach hinten weisenden Seite der Trägerschicht 1 und der nach außen weisenden Seite des nach vorne gezogenen, aus der Trägerschicht 1 gebildeten Randes anliegt. Im Ausführungsbeispiel liegt der vordere Rand der Kunststoffabdeckung 4 auf der entsprechend Fig. 3 verschweißten Randzone des Polstermaterials auf und ist, beispielsweise durch Verschweißen, fest mit der Trägerschicht 1 verbunden. Die nach innen weisende Seite des seitlichen Randes ist bis zu einer Stelle von der Zwischenschicht 2 abgedeckt, an die sich der seitliche Rand einer Polsterung 5 anschließt. Diese Polsterung 5, an der sich der Sitzbenutzer mit dem Rücken abstützt, liegt an dem den Boden der Schale bildenden Teil der Trägerschicht 1 an. Letztere bildet also nicht nur die Trägerschicht für die Zwischenschicht 2, sondern auch für die Polsterung 5, welche sich, wie Fig. 4 zeigt, bis zum seitlichen Rand erstreckt. Im Gegensatz zu der relativ weichen Polsterung 5 ist die Zwischenschicht 2 verhältnismäßig hart, um dem Körper des Sitzbenutzers bei einer Kurvenfahrt eine gute seitliche Führung zu geben.

Die Zwischenschicht 2 ist, wie in den Fig. 1 bis 3 dargestellt, mittels eines Bezuges 3, abgedeckt. Ferner ist im Ausführungsbeispiel eine gepolsterte Auflage 6 vorgesehen, welche nicht nur die Vorderseite der Polsterung 5 abdeckt, sondern auch den nach innen weisenden, der seitlichen Abstützung des Körpers des Sitzbenutzers dienenden Teil der Zwischenschicht 2. Mittels einer derartigen Auflage 6 kann ein Spalt am Übergang von der Zwischenschicht 2 zur Polsterung 5 überdeckt werden, so daß diese beiden Teile nicht genau aneinander anschließen müssen. Außerdem verhindert die Auflage 6, daß die an dem gegen die Polsterung 5 weisenden Ende der Zwischenschicht 2 vorhandene Kante störend in Erscheinung tritt.

Dieses Ausführungsbeispiel zeigt, daß das erfindungsgemäße Polstermaterial sowohl die Aufgaben einer Polsterung erfüllen kann als auch, wie dies im vorderen Teil des seitlichen Randes der Fall ist, dazu dienen kann, dem mit dem Polstermaterial versehenen Körper die gewünschte Form zu geben. Hinzu kommt noch die Funktion der Trägerschicht als tragendes Bauelement.

Den Vorteil, den das erfindungsgemäße Polstermaterial bei der Formgebung bietet, zeigt Fig. 5 besonders deutlich. Hier ist in Abwandlung der Konstruktion gemäß Fig. 4 die Dicke der Zwischenschicht 2 in demjenigen Bereich, in dem an ihr die Auflage 6 anliegt, so weit vermindert, daß ein praktisch stufenloser Übergang von der Auflage 6 zur Zwischenschicht 2 und deren Oberschicht vorhanden ist. Es kann also auch ohne Schwierigkeiten ein zusätzliches Element, wie es die Auflage 6 darstellt, in die Formgebung einbezogen werden, welche mit Hilfe des Polstermaterials erreicht werden soll.

Wegen der übrigen Einzelheiten des Ausführungsbeispiels gemäß Fig. 5 wird auf die Ausführungen zu Fig. 4 verwiesen.

## Patentansprüche

1. Polstermaterial, insbesondere für Fahrzeugsitze, mit einer Trägerschicht (1) aus einem thermoplastisch verformbaren Kunststoff, einer Oberschicht (3) aus einem Bezugsmaterial und einer zwischen diesen beiden Schichten (1, 3) liegenden und mit diesen verbundenen Zwischenschicht (2) aus einem Kunststoffschaum, dadurch gekennzeichnet, daß die Trägerschicht (1) selbsttragend mit einer eine stabile Form gewährleistenden Dicke ausgebildet ist.

2. Aus einem Polstermaterial gemäß dem Anspruch 1 hergestellter Polsterkörper, dadurch gekennzeichnet, daß die Oberschicht (3) längs ihres Randes mit der Zwischenschicht (2) und der selbsttragenden, eine stabile Form aufweisenden Trägerschicht (1) verschweißt ist.

3. Verfahren zur Herstellung eines Polsterkörpers gemäß Anspruch 2 aus einem Polstermaterial gemäß Anspruch 1, das unter thermoplastischer Verformung im Tiefziehverfahren in die gewünschte Form gebracht wird, dadurch gekennzeichnet, daß ein den erforderlichen Zuschnitt aufweisendes Stück aus dem aus den einzelnen Schichten (1, 2, 3) sandwichartig aufgebauten Polstermaterial mittels eines Schneidwerkzeuges oder eines Laserstrahles ausgeschnitten und bei der anschließenden Verformung längs seines Randes die Oberschicht (3) mit der Zwischenschicht (2) und der Trägerschicht (1) verschweißt wird.

## Claims

1. Padding material, particularly for vehicle seats, with a carrier layer (1) consisting of a thermoplastically deformably plastics material, an upper layer (3) of a covering material and, between these two layers (1, 3) and connected to them an intermediate layer (2) consisting of plastics foam, characterised in that the carrier layer (1), is of self-supporting construction and is of a thickness which guarantees stability of form.

2. Padding member produced from a padding material according to Claim 1, characterised in that the upper layer (3) is along its edge welded to the intermediate layer (2) and the self-supporting carrier layer (1) which is of stable form.

3. Method of producing a padding member according to Claim 2 of a padding material according to Claim 1, which is brought to the desired shape by a deep drawing process, undergoing a thermoplastic heat formation, characterised in that a piece of the sandwich-like padding material built up from the individual layers (1, 2, 3) is cut out to the necessary size by a cutting tool or a laser beam and during subsequent deformation along its edge, the upper layer (3) is welded to the intermediate layer (2) and the carrier layer (1).

## Revendications

1. Matériau de rembourrage, notamment pour sièges de véhicules, comportant une couche support (1) constituée d'un matériau thermoplastique déformable, une couche supérieure (3) constituée d'un matériau de revêtement et d'une couche intermédiaire (2) située entre ces deux couches (1, 3), reliée à elles et constituée d'un plastique mousse, caractérisé en ce que la couche support (1) est conçue auto-porteuse, avec une épaisseur garantissant une forme stable.

2. Elément de rembourrage fabriqué à partir d'un matériau de rembourrage conforme à la revendication 1, caractérisé en ce que la couche supérieure (3) est soudée, le long de sa bordure, à la couche intermédiaire (2) et à la couche support (1) auto-porteuse et présentant une forme stable.

3. Procédé de fabrication d'un élément de rembourrage conforme à la revendication 2, constitué d'un matériau de rembourrage conforme à la revendication 1, que l'on amène à la forme désirée par le procédé d'emboutissage profond avec formage thermoplastique. caractérisé en ce que l'on coupe à longueur, au moyen d'un outil de coupe ou d'un rayon laser, une portion, présentant la longueur nécessaire, d'un matériau de rembourrage constitué des différentes couches (1, 2, 3) à la façon d'un sandwich; et en ce que, lors du formage qui en résulte, on soude la couche supérieure (3), le long de sa bordure, avec la couche intermédiaire (2) et la couche support (1).

Fig.1

Fig.2

Fig.3

## Fig. 4

## Fig. 5